Europäisches Patentamt

European Patent Office

Office européen des brevets

(19)

(11) Publication number:
0 368 258
A1

# EUROPEAN PATENT APPLICATION

(21) Application number: 89120629.4

(22) Date of filing: 07.11.89

(51) Int. Cl.⁵: B60T 8/42

(30) Priority: 08.11.88 IT 6799588

(43) Date of publication of application:
16.05.90 Bulletin 90/20

(84) Designated Contracting States:
DE ES FR GB SE

(71) Applicant: FIAT AUTO S.p.A.
Corso Giovanni Agnelli 200
I-10135 Torino(IT)

(72) Inventor: Torrielli, Vittorino
Via Piacenza 27
I-10100 Torino(IT)
Inventor: Maggioni, Virginio
Via Stazione, 55
I-10090 Rosta(IT)

(74) Representative: Boggio, Luigi et al
STUDIO TORTA Società Semplice Via Viotti, 9
I-10121 Torino(IT)

(54) Vehicle anti-lock braking system with low power absorption.

(57) A vehicle anti-lock braking system (1) composed of a braking device for each vehicle wheel hub (2), a brake pump (5) operable by a pedal (7) for pressurising a fluid (9) contained in a reservoir (8) and for feeding the pressurised fluid to the braking device (3) through a hydraulic circuit (10), for each wheel hub (2) a sensor device (4) for measuring the wheel hub angular velocity, and electrohydraulic means (11) for shutting off the main hydraulic circuit (10) under the control of a control centre (12) connected to each said sensor (4); said electrohydraulic means (11) consisting of a variable-volume accumulation chamber (20) for each said braking device (3) disposed in series with said main hydraulic circuit (10) immediately upstream of the braking device (3) and downstream of a respective shutoff valve (21) and delimited by a sliding spool (22) which by virtue of its axial position controls the opening and closure of the shutoff valve (21), and a hydraulic spool control circuit provided with a low energy-consumption electrically operated pump (25) arranged to withdraw part of the brake fluid contained in the reservoir (8), a hydraulic accumulator (26), and a plurality of solenoid valves (51, 52) controlled by the control centre (12).

Fig.1

Xerox Copy Centre

# VEHICLE ANTI-LOCK BRAKING SYSTEM WITH LOW POWER ABSORPTION

This invention relates to a vehicle anti-lock braking system with low power absorption.

Braking systems are known provided with an anti-lock device, also known as an antiskid device. These are normal braking systems in which the oil feed to the braking devices (disc or drum type) is controlled by solenoid valves which are themselves controlled by a control centre connected to sensors for measuring the angular velocity of the vehicle wheels (or rather of the wheel hubs). When the difference between the angular velocities of the wheels exceeds a predetermined threshold the control centre acts to operate the valve (or plurality of valves) controlling the pressurised oil feed to the braking device for the wheel for which the sensor has determined an abnormal situation. Systems of the described type are not free of drawbacks. Firstly, they are complicated and have high energy consumption as the valves controlling the pressurised oil feed to the braking devices must themselves be fed with pressurised oil. Moreover, they are composed of costly and bulky components. Finally, during the operation of the anti-lock device pressure oscillations are created in the braking circuit, resulting in annoying pulsation of the brake pedal.

The object of the invention is to provide a vehicle anti-lock braking system which is of high reliability, uses low-cost components of small overall size and transmits no vibration or pulsation when braking with the anti-lock system in operation. Said object is attained according to the invention by a vehicle anti-lock braking system of the type comprising a braking device for each vehicle wheel hub, a brake pump operable by a pedal for pressurising a fluid contained in a reservoir and arranged to feed pressurised fluid to the braking device through a main hydraulic circuit, for each wheel hub a sensor device for measuring the wheel hub angular velocity, and electrohydraulic means for shutting off the main hydraulic circuit under the control of a control centre connected to each said sensor; characterised in that said electrohydraulic means comprise: a variable-volume accumulation chamber for each said braking device disposed, with respect to the flow direction of said pressurised fluid, in series with said main hydraulic circuit immediately upstream of the braking device and downstream of a respective shutoff valve, said accumulation chamber being delimited by a sliding spool connected to said shut-off valve in such a manner that by virtue of its axial position it controls the opening and closure of this latter; and for said spool a hydraulic control circuit comprising a low energy-consumption electrically operated pump arranged to withdraw part of the brake fluid contained in the reservoir and to accumulate it pressurised in a hydraulic accumulator, and at least one solenoid valve connected to said control centre and arranged to selectively connect, by way of said hydraulic control circuit, the spool control chamber respectively to said hydraulic accumulator and to a discharge branch of said hydraulic control circuit connected to said fluid reservoir.

The invention will be more apparent from the non-limiting description of one embodiment thereof given hereinafter with reference to the accompanying drawings in which:

Figure 1 is a diagrammatic view of a braking system provided with the anti-lock system according to the invention;

Figure 2 shows a possible modification of the system of Figure 1; and

Figure 3 is a longitudinal section to an enlarged scale showing a detail of the main components of the braking system according to the invention.

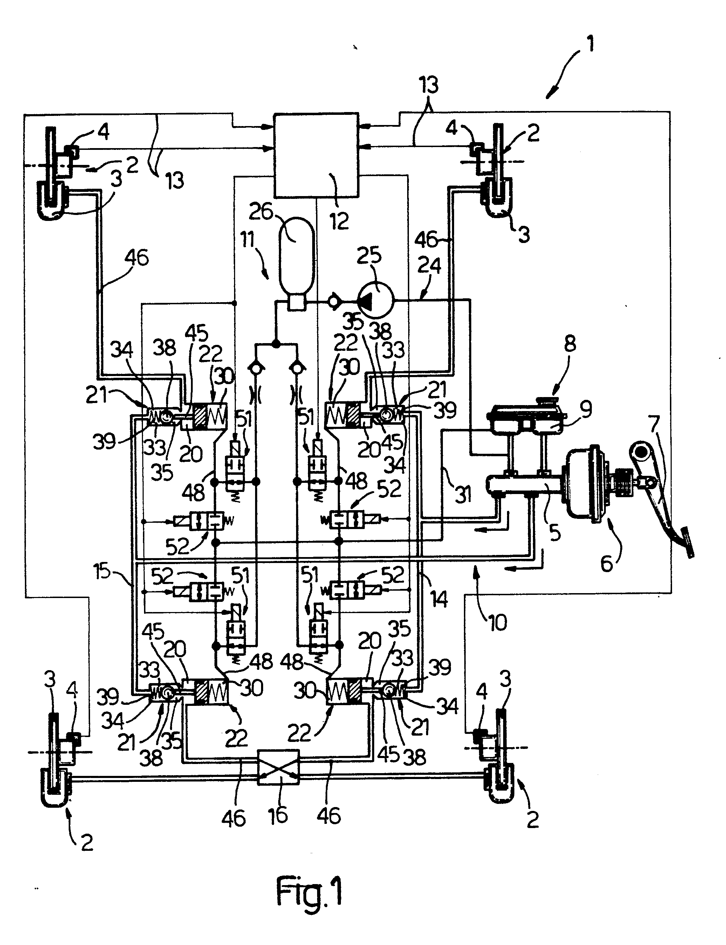

In Figures 1 to 3 the reference numeral 1 indicates overall an anti-lock braking system for a vehicle of any type, of which for simplicity there are shown only the respective wheel hubs 2, each of which is provided with a respective hydraulic braking device 3 of known type, for example of disc or drum type, and a known sensor 4 for measuring its angular velocity, both shown only schematically for simplicity. In addition to the devices 3 and sensors 4, the anti-lock braking system 1 comprises a brake pump 5 of known type, in this case defined by the master cylinder of a vacuum servobrake 6 of any known type, operable by a pedal 7, a known reservoir 8 for a fluid 9, in this case oil, a main hydraulic circuit 10 of known overall structure which connects together the pump 5, the reservoir 8 and the braking devices 3, and electrohydraulic means indicated overall by 11 to shut off the main hydraulic circuit 10 under the control of a known control centre 12 connected to the sensors 4 by data lines 13. When the user presses the pedal 7 the pump 5 withdraws fluid 9 from the reservoir 8, pressurises it and feeds it in known manner to the users, in this case the devices 3, through the circuit 10. In the illustrated non-limiting example, this latter is of the duplex type by being divided into two independent branches 14 and 15 separately fed by the pump 5 and each feeding the braking device 3 of a different pair of diagonally opposing wheels of the vehicle by way of a known brake corrector 16, and in this case the left front wheel and right rear wheel (for the branch 15) and the right front wheel and left rear wheel (for the branch 14).

According to the invention, for each braking device 3 or for each vehicle wheel hub 2, said electrohydraulic means 11 comprise a variable-volume accumulation chamber 20 disposed, with respect to the flow direction of the pressurised fluid 9 indicated by arrows in Figure 1, in series with the main hydraulic circuit 10 immediately upstream of the respective braking device 3 and immediately downstream of a respective shut-off valve 21 connected hydraulically in series with the circuit 10.

The accumulation chambers 20 are of variable volume in that each is delimited by a respective sliding spool 22 mechanically connected to the respective shutoff valve 21 disposed upstream of each chamber 20, so that the opening and closure of the valves 21 are controlled by the axial position of the respective spools 22.

The means 11 also comprise a hydraulic control circuit 24 for the spools 22, comprising a low power-consumption electrically operated pump 25 of known type arranged to withdraw part of the brake fluid 9 contained in the reservoir 8 and to accumulate it pressurised in a known hydraulic accumulator 26, and a series of solenoid valves controlled by the control centre 12 and arranged to selectively connect, by way of the hydraulic control circuit 24, respective variable-volume control chambers 30 of the spools 22 to the hydraulic accumulator 26 and to a discharge branch 31 of the control circuit 24 respectively, said branch 31 being connected to the reservoir 8.

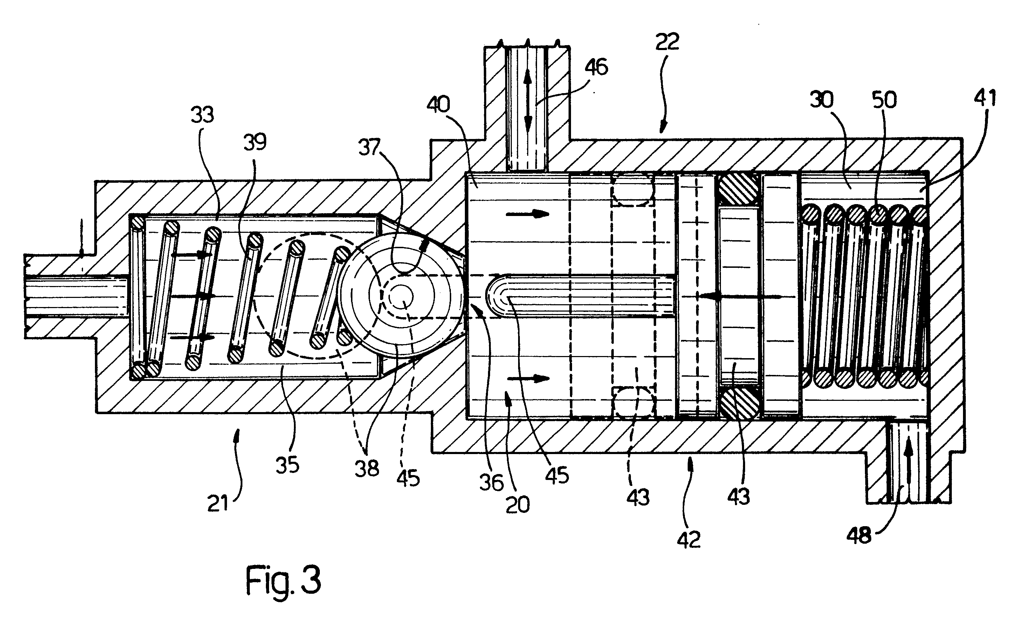

With particular reference to Figure 3, each shutoff valve 21 comprises a transit chamber 33 which at its first end 34 communicates with the brake pump 5 and at its second end 35, which is distant from the end 34 and comprises an axial bore 36 having a peripheral annular seal seat 37, communicates with the respective variable-volume accumulation chamber 20. Each valve 21 also comprises a valving element, in this case a ball 38, which is arranged to engage the seal seat 37 in a fluid-tight manner under the thrust of elastic means defined by a helical spring 39 housed in the transit chamber 33, in which it is inserted preloaded between the ball 38 and the end 34.

Again with reference to Figure 3, each control chamber 30 is coupled to and coaxial with a corresponding accumulation chamber 20, each pair of variable-volume chambers 20, 30 being defined by respective opposite ends 40 and 41 of a respective cylinder 42 which are separated in a fluid-tight manner from each other by a piston 43 axially mobile within the cylinder 42. The piston 43 of each cylinder 42 together with a push rod 45 rigidly fixed to the piston 43 to project axially therefrom define the respective spool delimiting a respective chamber 20. Specifically, the end 40 and consequently the chamber 20 of each cylinder 42 are connected hydraulically by a pipe 46 to a respective braking device 3 and, by way of the bore 36, to a transit chamber 33 which is connected to the circuit 10, the push rod 45 being arranged to cooperate through the axial bore 36 with the ball 38 housed in the relative chamber 33 in order to keep it separated from the seal seat 38 and thus provide communication between the chambers 33 and 20 via the bore 36. The end 41 and consequently the chamber 30 of each cylinder 42 are connected to the hydraulic control circuit 24, and in particular to respective tubular portions 48 thereof. Finally, the pistons 43 are preferably mobile within the cylinders 42 against the action of respective springs 50 housed in the chambers 30 and arranged to urge the respective piston 43 towards the end 40, ie in the sense of reducing the volume of the respective chamber 20.

In the non-limiting example illustrated in Figure 1, the pressure in the control chambers 30 is controlled by a pair of two-position on-off solenoid valves 51 and 52 for each chamber 30, these being known and forming part of the control circuit 24 and connected to the control centre 12 by which they are controlled. The valves 51 when de-energised are in their normally open state whereas the valves 52 when de-energised are in their normally closed state. The chambers 30 are therefore normally isolated from the discharge and are connected to the delivery side of the pump 25 and to the relative hydraulic accumulator 26 so that in the chambers 30 there is a pressure sufficient when combined with the thrust of any springs 50 to overcome the pressure in the chambers 33 and the thrust of the springs 39. Under these conditions the piston 43 of each cylinder 42 is in equilibrium in an axial position such that the push rod 45 keeps the ball 38 separated from the seat 37, the chambers 33 and 20 thus communicating through the bore 36. When braking occurs, the pressurised fluid fed into the circuit 10 by the pump 5 can therefore flow into all the chambers 20 and from these into the user devices 3 to cause braking of the vehicle wheels. During this stage, if the control centre 12 detects by means of the sensors 4 an abnormal situation at one or more wheels, it energises the solenoid valves 51 and 52 of the chamber feeding the device 3 relative to the wheel or wheels which are undergoing skidding. Consequently, for each pair of valves 51, 52 concerned, the valve 51 closes and the valve 52 opens, to cause a pressure drop in the relative control chamber 30, with consequent withdrawal of the piston 43 towards the end 41. This results in closure of the relative bore 36 by the ball 38, with consequent stoppage of pressurised oil feed to the relative device 3 and simultaneous increase in the volume of the relative chamber 20, so that the operating pressure of the relative device 3 is reduced to unlock the skidding wheel (or wheels). At this point, and for the remaining time during which braking is applied, a cyclic pressure transient is generated in the control circuit 24 and specifically in the pipe portions 48 and control chambers 30 fed by the valves 51, 52 concerned. In this respect, the pressure reduction in the chamber 20 due to feed stoppage and to its volume increase results in unlocking of the relative wheel so that the control centre 12 de-energises the previously energised solenoid valves 51, 52, so that the chamber 30 connected to them returns to pressure to cause the corresponding piston 42 to move towards the end 40, with consequent reduction in the volume of the corresponding chamber 20. This provides a pressure increase in the chamber 20 which is transmitted to the device 3, with consequent re-skidding of the relative wheel. At this point the control centre 12 re-operates the valves 51, 52 to again cause the piston 43 to move towards the end 41 and reduce the pressure in the chamber 20, with consequent unlocking of the wheels. This cyclic operating sequence of the valves 51, 52, with consequent pressure transient in the chambers 30 concerned continues until the pedal 7 is released to change the pressure in the main circuit 10 to a value less than that in the chambers 20, with consequent flow of oil from the devices 3 through the valves 21, which are reopened by the pressure difference between the chambers 20 and 33.

According to the invention, during the entire duration of the pressure transient in the chambers 30 the shutoff valves 21 relative to the wheels which have become locked remain closed, in contrast to known braking systems, in that the length of the push rod 45 is made less than the minimum length which the relative accumulation chamber 20 can assume while the chamber 30 is under transient pressure conditions. Consequently, the movements which the piston 43 undergoes towards the end 40 during the temporary unlocking of the wheel when under skid are never sufficient to cause the ball 38 to move from the seat 37, in that the maximum position reached by the piston 43 is that indicated by dashed lines (Figure 3) and the pressure in the chamber 20 is less than the pressure in the chamber 33, if the brake pedal is not released. Consequently, the hydraulic pressure oscillations which arise in the chambers 20 can in no case be transmitted to the main circuit 10 and from this to the pedal 7, to produce the annoying vibration or pulsation of the type typical of known anti-lock braking systems.

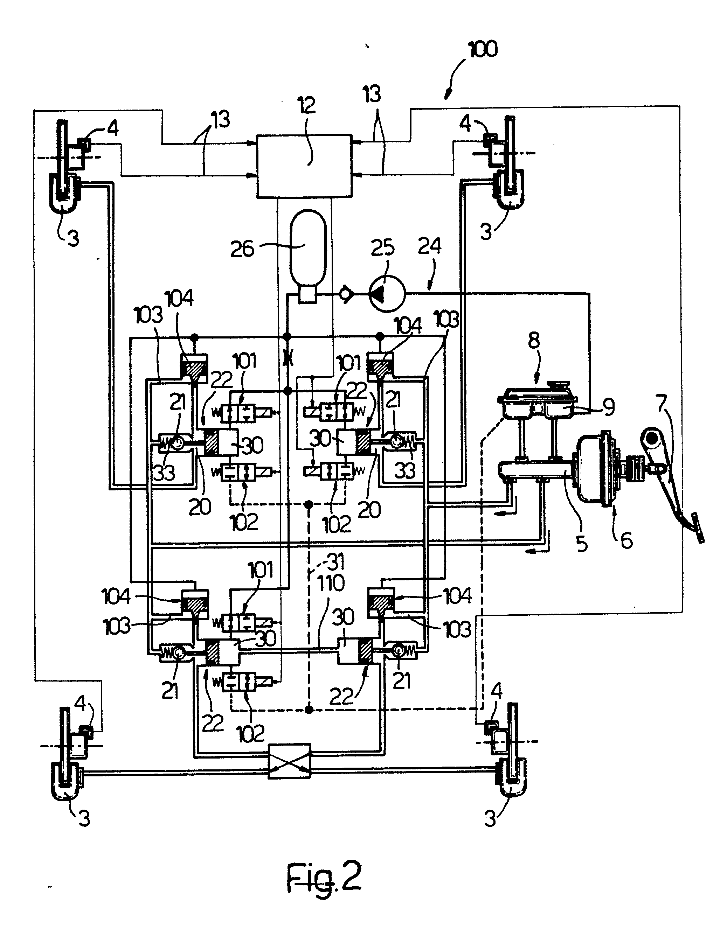

Figure 2 shows diagrammatically an anti-lock braking system 100 analogous to the described system 1 and of which it represents a possible modification. Parts similar or identical to those already described are indicated by the same reference numerals for simplicity. The only differences with the system 1 are that each control chamber 30 is served by solenoid valves 101 and 102 which are both normally closed when de-energised, and that the main hydraulic circuit 10 is provided for each shutoff valve 21 with a bypass pipe 103 connected in parallel with the valve 21 and directly connecting the main hydraulic circuit 10 to the accumulation chamber 20 so as to bypass the transit chamber 33 of each valve 21. The bypass pipes 103 are kept normally closed by respective known valves 104 operated by the pressure present in the hydraulic control circuit 24. The advantages of such modifications are apparent. Should the hydraulic accumulator 26 and/or pump 25 fail, the control circuit 24 depressurises to open the valves 104 and exclude the valves 21, so that normal braking is possible even if the anti-lock device is deactivated. In contrast, in the case of the system 1, if pressure is lost in the circuit 24 the valves 21 remain locked in their closed position, making braking impossible. Further differences between the system 100 and the system 1 are that only one of the chambers 30 serving the rear wheels is provided with the valves 101, 102, the other being directly and permanently connected to the first by a pipe 110.

The advantages of the invention are apparent from the aforegoing description. Not only is the braking system of very simple structure by virtue of using small-size low-cost devices such as the valves 21 and relative cylinders 42, but in addition prevents transmission of any vibration or pulsation to the brake pedal 7 when the anti-lock device is active, and has a very low power consumption. In this respect because of the provision of the accumulator 26 and the particular structure of the main circuit 10 and control circuit 24 the pump 25 can be of low power as its only task is to keep the accumulator 26 filled. It is in fact this latter which in real time provides the hydraulic power required to operate the anti-lock device. It is also apparent that numerous modifications can be made to the invention particularly in terms of the number and arrangement of the solenoid valves which control the pressure in the control chambers 30. For example each pair of two-position solenoid valves 51, 52 can be replaced in the system 1 by a single known three-position solenoid valve to provide the same operation.

## Claims

1. A vehicle anti-lock braking system of the type comprising a braking device for each vehicle wheel hub, a brake pump operable by a pedal for pressurising a fluid contained in a reservoir and arranged to feed pressurised fluid to the braking device through a main hydraulic circuit, for each wheel hub a sensor device for measuring the wheel hub angular velocity, and electrohydraulic means for shutting off the main hydraulic circuit under the control of a control centre connected to each said sensor;
characterised in that said electrohydraulic means comprise: a variable-volume accumulation chamber for each said braking device disposed, with respect to the flow direction of said pressurised fluid, in series with said main hydraulic circuit immediately upstream of the braking device and downstream of a respective shutoff valve, said accumulation chamber being delimited by a sliding spool connected to said shut-off valve in such a manner that by virtue of its axial position it controls the opening and closure of this latter; and for said spool a hydraulic control circuit comprising a low energy-consumption electrically operated pump arranged to withdraw part of the brake fluid contained in the reservoir and to accumulate it pressurised in a hydraulic accumulator, and at least one solenoid valve connected to said control centre and arranged to selectively connect, by way of said hydraulic control circuit, the spool control chamber respectively to said hydraulic accumulator and to a discharge branch of said hydraulic control circuit connected to said fluid reservoir.

2. A braking system as claimed in claim 1, characterised in that said brake pump is defined by the master cylinder of a vacuum servobrake.

3. A braking system as claimed in claim 1 or 2, characterised in that each said shutoff valve comprises a transit chamber which at its first end communicates with said brake pump and at its second end, which is distant from said first and comprises an axial bore having a peripheral annular seal seat, communicates with said variable-volume accumulation chamber, and further comprises a valving element arranged to engage said annular seal seat in a fluid-tight manner under the thrust of elastic means housed in said transit chamber.

4. A braking system as claimed in claim 3, characterised in that said valving element is a ball, said elastic means being defined by a spring inserted preloaded between said ball and said first end of the transit chamber.

5. A braking system as claimed in claim 3 or 4, characterised in that said spool comprises a piston slidable in a fluid-tight manner within a cylinder hydraulically connected at its first end to said braking device and at its second end to said hydraulic control circuit so as to define within said cylinder said accumulation chamber at the first end of the cylinder and said control chamber at said second end of the cylinder, a push rod being fixed rigidly to said piston to project therefrom and cooperate with said valving element through said axial bore of the shutoff valve.

6. A braking system as claimed in claim 5, characterised in that the length of said push rod is less than the minimum length which said accumulation chamber can assume while said control chamber is under transient pressure conditions.

7. A braking system as claimed in claim 5 or 6, characterised in that said piston is mobile within said cylinder against the action of elastic means housed in said control chamber and arranged to urge said piston towards said first end of the cylinder.

8. A braking system as claimed in any one of the preceding claims, characterised in that said main hydraulic circuit is provided, for each said shutoff valve, with a bypass pipe connected in parallel with said shutoff valve and directly connecting said main hydraulic circuit to the accumulation chamber, said bypass pipe being kept normally closed by a valve operated by the pressure in the hydraulic control circuit.

EP 0 368 258 A1

Fig.1

Fig.2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 924 484 (A. TEVES GMBH) <br> * the whole document * <br> --- | 1-8 | B 60 T 8/42 |
| X | DE-A-3 602 430 (A.TEVES GMBH) <br> * column 4, line 68 - column 6, line 28; figures * | 1-4 | |
| A | | 5-7 | |
| | --- | | |
| A | EP-A-0 209 278 (LUCAS INDUSTRIES) <br> --- | | |
| A | DE-A-3 543 761 (HONDA) <br> ----- | | |

TECHNICAL FIELDS SEARCHED (Int. Cl.5)

B 60 T

The present search report has been drawn up for all claims

| Place of search | Date of completion of the search | Examiner |
|---|---|---|
| BERLIN | 18-01-1990 | BLURTON M D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)